# EUROPEAN PATENT APPLICATION

(11) **EP 4 389 264 A1**
(43) Date of publication of application: **26.06.2024**
(21) Application number: 22216469.1
(22) Date of filing: 23.12.2022
(51) Int. Cl.: B01D 61/14, B01D 67/00, B01D 69/02, B01D 69/06, B01D 71/68

(54) **POLYMER CASTING SOLUTION FOR ULTRAFILTRATION MEMBRANES**

(71) Applicant: Fraunhofer-Gesellschaft zur Förderung der angewandten Forschung e.V., 80686 München (DE)
(72) Inventor: KLUGE, Steven, 14476 Potsdam (DE); BERLEKAMP, Sabine, 14476 Potsdam (DE); TUTUS, Murat, 14476 Potsdam (DE)
(74) Representative: Maiwald GmbH

(57) **Abstract**

The present invention relates to a polymer casting solution for polysulfone membranes comprising a polysulfone and γ-butyrolactone as a solvent, a process for obtaining a polysulfone membrane and uses thereof.

## Description

### Technical field

The present invention relates to a polymer casting solution for membranes comprising polysulfone and γ-butyrolactone, a process for obtaining a membrane and uses thereof.

### Technical Background

The removal of undesired or desired substances from liquid media constitutes challenges for various filtration techniques and improved membranes are highly sought after.

One filtration technique that can separate suspended solids from macromolecular to nanomolecular size is the ultrafiltration method.

Ultrafiltration utilizes pressure or concentration gradients to force a liquid medium through a semipermeable membrane, separating the suspended solids or solutes of high molecular weight from the solvent.

The usable solvent in the liquid medium is not limited to water and can comprise other solvents like ethanol or isopropanol.

Typically, pressures of several bars are applied to achieve high flow rates of the liquid medium through the ultrafiltration membrane.

Therefore, ultrafiltration membranes need to possess a high chemical and mechanical stability.

Ultrafiltration membranes can be obtained by a phase inversion process from polymers dissolved in high-boiling solvents such as dimethyl formamide (DMF), dimethyl sulfoxide (DMSO), dimethyl acetamide (DMAc) or N-methylpyrrolidone (NMP).

Phase inversion via immersion precipitation is a common membrane preparation method. Thereby, a polymer dissolved in a solvent is cast on a supporting layer and then submerged in a coagulation bath containing non-solvent. Due to the solvent and non-solvent exchange, solidification of the polymer takes place and a membrane is formed. The membrane structure is affected by the occurring phase separation and mass transfer.

Usually, phase inversion processes are used to generate asymmetric membranes, where a thin separation layer is constructed onto a coarsely porous support layer for mechanical stability, wherein the separation layer can have a dense surface layer or are uniformly porous structure.

Dense surface separation layers can be used as membranes for gas separation or nanofiltration, which work based on reversed osmosis, while porous separation layers can be used, depending on the pore size, for ultra or microfiltration.

Polyfsulfones have demonstrated to be suitable polymers for the manufacturing of porous membranes.

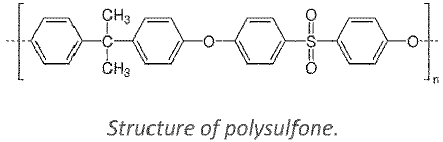

EP 0362588 A1 discloses a porous polysulfone membrane with pore sizes between 100 nm and 220 nm using NMP as solvent and glycerine as stabilizing agent to prevent the collapse of the pores.

Further, polyacrylnitriles can be used as the polymer instead of polysulfones to produce membranes for ultrafiltration.

DE 19546837 C1 and DE 19546836 C1 disclose polyacrylonitrile membranes and polyacrylonitrile capillary membranes respectively, with an average pore size of less than 10 nm and a narrow pore size distribution. In the production of these membranes, mixtures of NMP with and without DMAc and with γ-butyrolactone are used as the solvent for the polyacrylonitrile.

However, solvents such as dimethyl formamide (DMF), dimethyl sulfoxide (DMSO), dimethyl acetamide (DMAc) and N-methylpyrrolidone (NMP) are potentially harmful substances and explicit safety measures have to be taken in order to protect the workers, users and the environment from coming in contact with the liquid solvents or evaporated fumes thereof. Accordingly, they should be avoided in compliance with the REACH regulations.

Therefore, the need for harmless solvents that can solve the respective polymers and can be used to produce porous membranes is high.

During intensive studies in this area, it was now surprisingly found, that γ-butyrolactone is a good solvent for polysulfones and that the respective polysulfone solution can be used to obtain porous, symmetric membranes with high chemical and mechanical stability as well as tuneable pore sizes and narrow pore size distributions, without the need for harmful solvents, additives such as pore forming agents or stabilizing agents, or a support layer for mechanical stability.

### Summary of the Invention

In one aspect, the present invention relates to a polymer casting solution, characterized in that the solution comprises
(i) a polysulfone, and
(ii) γ-butyrolactone as a solvent.

In a further aspect, the invention relates to a process for obtaining the polymer casting solution as described above or below, characterized in that the process comprises the following steps:
a. providing γ-butyrolactone as solvent,
b. adding a polysulfone to the γ-butyrolactone, and
c. dissolving the polysulfone in the γ-butyrolactone by mixing.

In another aspect, the present invention relates to a process for obtaining a polysulfone membrane, characterized in that the process comprises the following steps:
I. providing a polymer casting solution as described above or below,
II. applying the polymer casting solution on a smooth surface,
III. processing the polymer casting solution into a wet film,
IV. exposing the wet film obtained in step III to a non-solvent in a coagulation bath, and
V. drying the polysulfone membrane obtained in step IV.

In yet another aspect, the present invention relates to a polysulfone membrane, preferably obtained by the process as described above or below, characterized in that the polysulfone membrane is symmetric and has a sponge-like structure.

In a last aspect, the present invention relates to the use of the polysulfone membrane as described above or below as an ultrafiltration membrane.

### Brief description of the Figures

FIG 1 shows a scanning electron microscope (SEM) image of the breaking edge of a polysulfone membrane obtained by the inventive process.
FIG 2 shows a SEM image of the surface of a polysulfone membrane obtained by the inventive process (left) and a magnified portion of that surface (right).
FIG 3 shows the graphical representation of the measurements carried out with the porometer Porolux 500 on a polysulfone membrane obtained by the inventive process.
FIG 4 shows the flow rate of isopropanol through a polysulfone membrane obtained by the inventive process.
FIG 5 shows a SEM image of the breaking edge of a polysulfone membrane obtained by the inventive process before (left) and after (right) exposing the polysulfone membrane to a pressure of 80 bar (trans membrane pressure, TMP) for 30 minutes in a system LSta80-SPS from SIMA-tec GmbH.

### Detailed description of the Invention

### Polymer casting solution:

The present invention relates to a polymer casting solution for a membrane comprising a polysulfone and γ-butyrolactone as a solvent.

A polymer casting solution within the meaning of the present invention is a polymer solution than can be used to cast a wet film.

In order to facilitate the dissolution of the polysulfone in the γ-butyrolactone, the polymer casting solution preferably complies with at least one of the following aspects, which are the weight average molar mass of the polysulfone, the concentration of the polysulfone, the concentration of the γ-butyrolactone, the combined amount of polysulfone and γ-butyrolactone, and the weight ratio of polysulfone to γ-butyrolactone in the polymer casting solution.

The weight average molar mass of the polysulfone is preferably in the range of 1·10⁴ g mol⁻¹ to 5·10⁵ g mol⁻¹, more preferably of 5·10⁴ g mol⁻¹ and 1·10⁵ g mol⁻¹.

The amount of the polysulfone is preferably in the range of 1 wt% and 20 wt%, more preferably of 5 wt% and 18 wt%, even more preferably of 8 wt% and 16.5 wt% based on the total weight of the polymer casting solution.

The amount of γ-butyrolactone is preferably in the range of 50 wt% to 99 wt%, more preferably of 70 wt% to 95 wt%, even more preferably of 83.5 wt% to 92 wt% based on the total weight of the polymer casting solution.

The combined amount of polysulfone and γ-butyrolactone in the solution is preferably in the range of 90 wt% to 100 wt%, more preferably of 93 wt% to 100 wt%, even more preferably of 95 wt% to 100 wt% based on total weight of the polymer casting solution.

The weight ratio of polysulfone to γ-butyrolactone is preferably in the range of 0.05 to 0.25, more preferably of 0.08 to 0.20.

The polymer casting solution can be further modified to achieve desirable characteristics such as an increased hydrophilicity of the resulting membrane or longevity of the respective polymer casting solution by adding an additive. Possible additives are pore forming agents.

Pore forming agents are compounds that do not react with the membrane material and can be removed without influencing the polymer releasing pores (defects) in the membrane material.

Examples of suitable pore forming agents are polyvinylpyrrolidone and block copolymers of ethylene oxide and propylene oxide (e.g. pluronic L-35 or pluronic L-64).

It is preferred, that the total amount of additive does not exceed 100 wt%, more preferably 80 wt%, even more preferably 50 wt% based on the weight of polysulfone in the polymer casting solution.

### Process for obtaining the polymer casting solution:

The polymer casting solution as described above can be obtained by a process comprising the following steps
a. providing γ-butyrolactone as solvent,
b. adding a polysulfone to the γ-butyrolactone, and
c. dissolving the polysulfone in the γ-butyrolactone by mixing.

When the polymer casting solution comprises an additive as described above, the process includes a further step a1, wherein the additive is added to the γ-butyrolactone before adding the polysulfone in step b.

The process to obtain a polymer casting solution comprising an additive comprises therefore the following steps
a. providing γ-butyrolactone as solvent,
a1. adding an additive to the γ-butyrolactone
b. adding a polysulfone to the γ-butyrolactone, and
c. dissolving the polysulfone in the γ-butyrolactone by mixing.

The temperature at which the mixing in step c of any of the processes as described above is carried out is preferably in the range of 0 °C and 200 °C, more preferably in the range of 20 °C and 100 °C, even more preferably in the range of 50 °C and 80 °C.

The time for which the mixing in step c of any of the processes as described above is carried out is preferably in the range of 1 h to 200 h, preferably in the range of 12 h to 168 h, more preferably in the range of 14 h to 36 h.

It might be advantageous to filter the solution obtained in step c of any of the processes as described above, if unsolved impurities are present in the solution. The filtration can be carried out at 1 bar transmembrane pressure (TMP) through a metal grid.

The mixing in step c can be done by any known technique known in the art.

The polymer casting solution as described above that can be obtained by any of the processes as described above can be used to manufacture a polysulfone membrane.

### Process for obtaining a polysulfone membrane:

The process for obtaining a polysulfone membrane according to the invention comprises the following steps
I. providing a polymer casting solution as described above or below,
II. applying the polymer casting solution on a smooth surface,
III. processing the polymer casting solution into a wet film,
IV. exposing the wet film obtained in step III to a non-solvent in a coagulation bath, and
V. drying the polysulfone membrane obtained in step IV.

### Step II:

Application of the polymer casting solution on a smooth surface can be carried out by any method known in the art.

The smooth surface can be any material with a smooth surface from which the membrane can be separated.

The smooth surface is preferably a glass plate, a silicon plate or a plastic plate.

### Step III:

The film producing process in step III can be any known film casting technique that is capable of producing a uniform wet film (protomembrane).

Preferably, the doctor blade coating technique is used for processing the polymer casting solution into a wet film.

The doctor blade coating technique uses a doctor blade with a fixed distance (gap height) to a surface (smooth surface plate on a belt) on which the polymer casting solution is applied. The polymer casting solution is then applied to the surface in front of the blade and through the movement of the belt at a certain speed under the doctor blade, a uniform wet film can be obtained.

Preferably, the gap height of the doctor blade is in the range of 100 µm and 400 µm, more preferably of 125 µm and 300 µm.

The belt speed is preferably in the range of 0.5 m·min⁻¹ to 5 m·min⁻¹, more preferably of 0.8 m·min⁻¹ to 2 m·min⁻¹.

### Step IV:

Non-solvents according to the invention are solvents in which the polysulfone is essentially insoluble.

In order for a solvent and non-solvent exchange to occur, miscibility of the solvent and non-solvent has to be high.

Due to the solvent and non-solvent exchange, solidification of the polysulfone takes place and a membrane is formed.

Preferably, the non-solvent is selected from water, methanol, and combinations thereof, more preferably the non-solvent is water.

The period of time at which the film is exposed to the non-solvent in the coagulation bath is preferably at least 6 min, more preferably in the range of 6 min to 30 min, even more preferably of 8 min to 25 min.

The temperature of the non-solvent in the coagulation bath is preferably in the range of 5 °C to 90 °C, more preferably in the range of 15 °C to 40 °C.

### Step V:

Drying of the membrane obtained in step IV is preferably carried out for at least 12 h, more preferably in the range of 12 h to 50 h, even more preferably in the range of 16 h to 30 h.

Preferably, the membrane in step V is air-dried, more preferably air-dried at a temperature in the range of 20°C to 30°C.

### Polysulfone Membrane:

The inventive polysulfone membrane, which is preferably obtained by one of the inventive processes as described above or below, is a symmetric membrane and possesses a sponge-like, porous structure.

Symmetric membranes are membranes with a uniform structural morphology throughout the cross-section of the membrane and do not have asymmetric portions like caverns, a dense skin layer or a structural support layer.

The surface of the membrane is preferably uniformly covered in pores and/or has surface pores with a pore size in the range of 1 nm and 100 nm, preferably 5 nm and 50 nm determined by SEM imaging.

The determination of the largest pore size, the mean flow pore and the smallest pore size of a membrane is known in the art.

The use of porometers is known in the art.

Porometers, for example a Porolux 500, can be used and in order to obtain experimental Data by measurements performed on the membrane. This Data can be interpreted to determine the largest pore size, the mean flow pore and the smallest pore size of a membrane. Thereby it is exploited that the pressure required to empty pores of a certain diameter is inverse proportional to the pore size.

The obtained Data is interpreted according to the scheme described below.

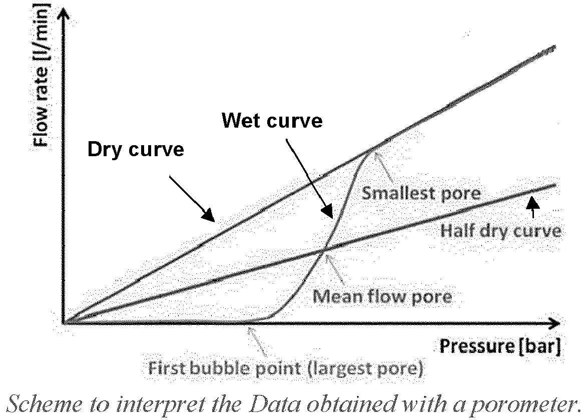

The largest pore size is represented by the first bubble point (FBP). The FBP corresponds to the pressure at which the first continuous bubbles are detected. The mean flow pore size (MFP), that is the most frequently occurring pore size and the smallest pore size (SP) correspond with the respective intersection of the wet curve with the half dry curve and the dry curve. The pore size distribution can then be determined by calculating the difference between the FBP and the SP.

The pore size distribution determined by examination of the inventive polysulfone membrane with a porometer is preferably in the range of 0.1 nm and 20 nm, more preferably in the range of 0.1 nm and 15 nm, even more preferably in the range of 0.1 nm and 10 nm.

The mean flow pore size determined by examination of the polysulfone membrane with a porometer is preferably in the range of 25 nm to 36 nm, preferably 27 nm to 33 nm, more preferably 29 nm to 31 nm.

The thickness of the polysulfone membrane is preferably in the range of 10 µm to 200 µm, more preferably 20 µm to 80 µm.

### Use of the polysulfone membrane for Ultrafiltration:

Because of the pore sizes and the uniform porosity (absence of a dense skin layer) of the inventive, symmetric polysulfone membranes, preferably obtained by one of the above described processes, they can be used as an ultrafiltration membrane.

Further, the invention relates to the following, numbered statements.
1. A polymer casting solution for a membrane, characterized in that the solution comprises
   (i) a polysulfone, and
   (ii) γ-butyrolactone as a solvent.
2. The polymer casting solution according to statement 1, characterized in that the polysulfone has a weight average molar mass in the range of 1·10⁴ g mol⁻¹ to 5·10⁵ g mol⁻¹, preferably of 5·10⁴ g mol⁻¹ and 1·10⁵ g mol⁻¹.
3. The polymer casting solution according to any one of the preceding statements, characterized in that the amount of polysulfone is in the range of 1 wt% and 20 wt%, preferably of 5 wt% and 18 wt%, more preferably of 8 wt% and 16.5 wt% based on the total weight of the polymer casting solution.
4. The polymer casting solution according to any one of the preceding statements, characterized in that the amount of γ-butyrolactone is in the range of 50 wt% to 99 wt%, preferably of 70 wt% to 95 wt%, more preferably of 83.5 wt% to 92 wt% based on the total weight of the polymer casting solution.
5. The polymer casting solution according to any one of the preceding statements, characterized in that the combined amount of polysulfone and γ-butyrolactone in the solution is in the range of 90 wt% to 100 wt%, preferably of 93 wt% to 100 wt%, more preferably of 95 wt% to 100 wt% based on the total weight of the polymer casting solution.
6. The polymer casting solution according to any one of the preceding statements, characterized in that the weight ratio of polysulfone to γ-butyrolactone is in the range of 0.05 to 0.25, preferably of 0.08 to 0.20.
7. The polymer casting solution according to any one of the preceding statements, characterized in that the solution does not comprise a further solvent selected from dimethyl acetamide or N-methylpyrrolidone, preferably does not comprise dimethyl acetamide, N-methylpyrrolidone, dimethyl formamide or dimethyl sulfoxide, more preferably does not comprise any further solvent.
8. A process for obtaining the polymer casting solution according to any of the preceding statements, characterized in that the process comprises the following steps:
   a. providing γ-butyrolactone as a solvent,
   b. adding a polysulfone to the γ-butyrolactone, and
   c. dissolving the polysulfone in the γ-butyrolactone by mixing.
9. The process according to statement 8, characterized in that the mixing in step c is carried out at a temperature in the range of 0 °C and 200 °C, preferably in the range of 20 °C and 100 °C, more preferably in the range of 50 °C to 80 °C.
10. The process according to statements 8 or 9, characterized in that the mixing in step c is carried out for a period of time in the range of 1 h to 200 h, preferably in the range of 12 h to 168 h, more preferably in the range of 14 h to 36 h.
11. The process according to any of 8 to 10, characterized in that the process comprises an additional step a1 before step b, characterized in that an additive is added to the γ-butyrolactone in step a1.
12. The process according to any of statements 8 to 11 characterized in that the polymer casting solution obtained in step c is filtered after the dissolution of the polysulfone.
13. A process for obtaining a polysulfone membrane, characterized in that the process comprises the following steps
   I. providing a polymer casting solution according to any one of statements 1 to 7,
   II. applying the polymer casting solution on a smooth surface,
   III. processing the polymer casting solution into a wet film,
   IV. exposing the wet film obtained in step III to a non-solvent in a coagulation bath, and
   V. drying the polysulfone membrane obtained in step IV.
14. The process according to statement 13, characterized in that the film obtained in step III is produced by the doctor blade technique utilizing a doctor blade.
15. The process according to statement 14, wherein the gap height of the doctor blade is in the range of 100 µm and 400 µm, preferably of 125 µm and 300 µm.
16. The process according to statements 14 or 15, wherein the belt speed is in the range of 0.5 m·min⁻¹ to 5 m·min⁻¹, preferably of 0.8 m·min⁻¹ to 2 m·min⁻¹.
17. The process according to any one of statements 13 to 16, characterized in that the non-solvent used in step IV is selected from the list consisting of water, methanol, and combinations thereof, preferably water.
18. The process according to any one of statements 13 to 17, characterized in that step IV is carried out for at least 6 min, preferably in the range of 6 min to 30 min, more preferably 8 min to 25 min.
19. The process according to any one of statements 13 to 18, characterized in that step IV is carried out at a temperature in the range of 5 °C to 90 °C, preferably 15 °C to 40 °C.
20. The process according to any one of statements 13 to 19, characterized in that step V is carried out for at least 12 h, preferably in the range of 12 h to 50 h, even more preferably in the range of 14 h to 30 h.
21. The process according to any one of statements 13 to 20, characterized in that the polysulfone membrane in step V is air-dried, preferably air-dried at a temperature in the range of 20 °C to 30 °C.
22. A polysulfone membrane, characterized in that the membrane is a symmetric membrane with a sponge-like, porous structure.
23. The polysulfone membrane according to statement 22, characterized in that the surface of the membrane is uniformly covered in pores.
24. The polysulfone membrane according to statements 22 or 23, characterized in that the surface pores have a pore size in the range of 1 nm and 100 nm, preferably 5 nm and 50 nm.
25. The polysulfone membrane according to any of statements 22 to 24, characterized in that the pore size distribution determined by examination of the membrane with a porometer is in the range of 0.1 nm and 20 nm, preferably in the range of 0.1 nm and 15 nm, more preferably in the range of 0.1 nm and 10 nm.
26. The polysulfone membrane according to any of statements 22 to 25, characterized in that the mean flow pore size determined by examination of the membrane with a porometer is in the range of 25 nm to 36 nm, preferably 27 nm to 33 nm, more preferably 29 nm to 31 nm.
27. The polysulfone membrane according to any of statements 22 to 26, characterized in that the thickness of the membrane is in the range of 10 µm to 200 µm, preferably 20 µm to 80 µm.
28. The polysulfone membrane according to any of statements 22 to 27, characterized in that the polysulfone membrane is obtained by any of the processes according to any of statements 13 to 21.
29. A use of the polysulfone membrane according to any one of statements 22 to 28 as an ultrafiltration membrane.

### Experimental Procedure:

### Inventive Polysulfone Membrane

15 g of a polysulfone with a weight average molar mass of 7.9·10⁴ g mol⁻¹ was added to 85 g of γ-butyrolactone and stirred at 60 °C for 16 h. The obtained polymer casting solution was applied on a glass plate and processed into a wet film by doctor blade coating technique with a belt speed of 1 m·min⁻¹ and a gap height of the doctor blade of 150 µm. The obtained wet film was directly exposed to water in a coagulation bath for 8 min at 22 °C and afterwards air-dried for 18 h at 22 °C. The obtained polysulfone membrane had a thickness of 34 µm.

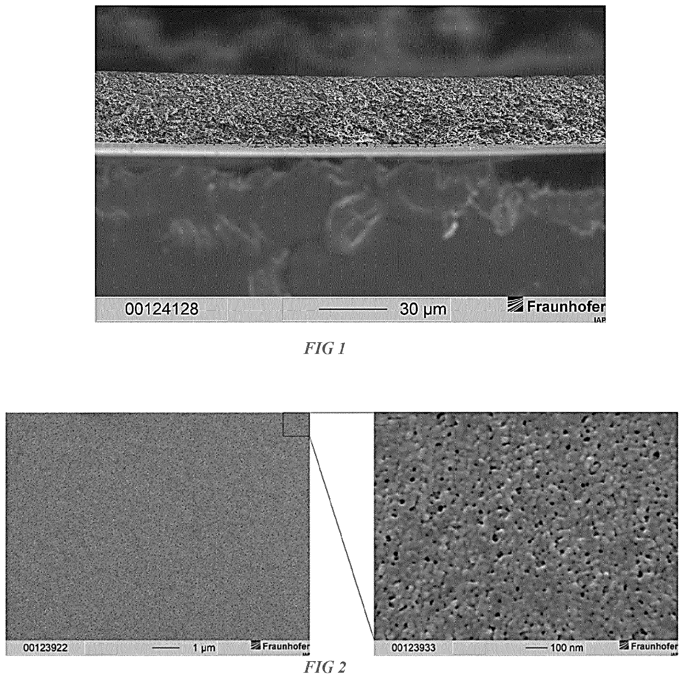

The SEM recording (FIG 1) of the breaking edge of the obtained polysulfone membrane shows a continuous, sponge-like structure of the symmetric membrane with uniformly distributed pores.

Further, the SEM recording (FIG 2) of the surface of the obtained polysulfone membrane shows that the surface is uniformly covered with pores having a size of substantially less than 100 nm.

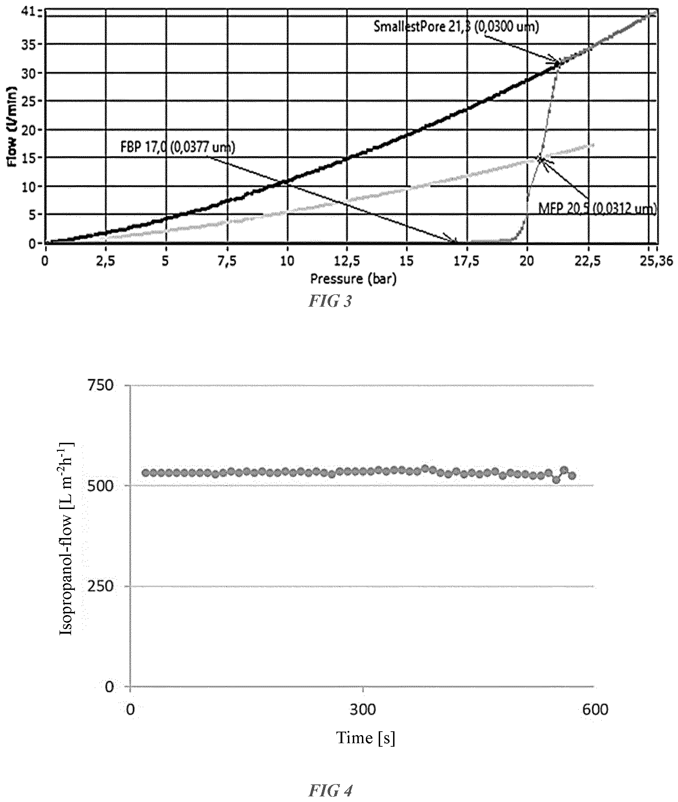

FIG 3 shows the graphic representation of the Data obtained by examination of the obtained polysulfone membrane with a porometer (Porolux 500). The obtained graph is interpreted according to the scheme described above to determine the largest pore size represented by the first bubble point FBP (37.7 nm), the smallest pore size SP (30.0 nm) and the mean flow pore size MFP (31.3 nm). The pore size distribution (7.7 nm) was determined by calculating the difference between the FBP and SP.

The chemical stability of the obtained membrane can be seen by the constant isopropanol flow through the membrane (FIG 4). After 10 min at 1 bar trans membrane pressure TMP, the isopropanol flow through the membrane did not lead to a transformation of the membrane that would result in a change of isopropanol flow. Therefore, the membrane possesses a high chemical stability towards organic solvents.

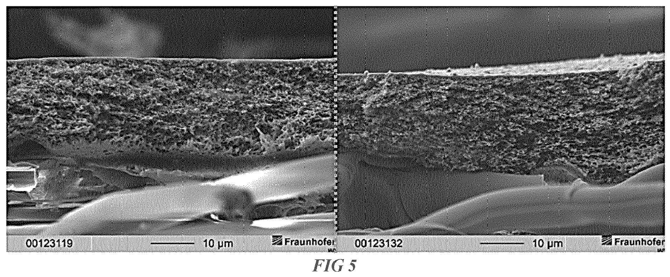

Lastly, the mechanical stability was tested in a LSta80-SPS system from SIMA-tec GmbH. FIG 5 shows SEM recordings of the breaking edge of the membrane before (left) and after (right) exposing the membrane to a pressure of 80 bar (trans membrane pressure, TMP) for 30 minutes at room temperature (22 °C). The unchanged symmetric, sponge-like structure of the inventive membrane after the treatment at 80 bar clearly shows the high mechanical (pressure) stability of the inventive membrane and that there is no need for a support layer to increase the mechanical stability, as commonly used in the prior art.

The obtained inventive symmetric membrane with a narrow pore size distribution, a MFP of 31.3 nm and high chemical and mechanical stability possesses excellent properties to be used as an ultrafiltration membrane.

### Comparative Polysulfone Membrane

15 g of a polysulfone with a weight average molar mass of 7.9·10⁴ g mol⁻¹ was added to 85 g of γ-valerolactone and stirred at 60 °C for 16 h. The obtained polymer casting solution was applied on a glass plate and processed into a wet film by doctor blade coating technique with a belt speed of 1 m·min⁻¹ and a gap height of the doctor blade of 150 µm. The obtained wet film was directly exposed to water in a coagulation bath for 8 min at 22 °C and afterwards air-dried for 18 h at 22 °C.

The obtained comparative polysulfone membrane was dense until 5 bar trans membrane pressure and did not possess a porous structure. The obtained comparative polysulfone membrane is unsuitable for use as an ultrafiltration membrane.

## Claims

1. A polymer casting solution for a membrane, **characterized in that** the solution comprises
(i) a polysulfone, and
(ii) γ-butyrolactone as a solvent.

2. The polymer casting solution according to claim 1, **characterized in that** the polysulfone has a weight average molar mass in the range of 1·10⁴ g mol⁻¹ to 5·10⁵ g mol⁻¹, preferably of 5·10⁴ g mol⁻¹ and 1·10⁵ g mol⁻¹ and/or that the amount of polysulfone is in the range of 1 wt% and 20 wt%, preferably of 5 wt% and 18 wt%, more preferably of 8 wt% and 16.5 wt% based on the total weight of the polymer casting solution.

3. The polymer casting solution according to any one of the preceding claims, **characterized in that** the amount of γ-butyrolactone is in the range of 50 wt% to 99 wt%, preferably of 70 wt% to 95 wt%, more preferably of 83.5 wt% to 92 wt% based on the total weight of the polymer casting solution and/or that the combined amount of polysulfone and γ-butyrolactone in the solution is in the range of 90 wt% to 100 wt%, preferably of 93 wt% to 100 wt%, more preferably of 95 wt% to 100 wt% based on the total weight of the polymer casting solution and/or that the weight ratio of polysulfone to γ-butyrolactone is in the range of 0.05 to 0.25, preferably of 0.08 to 0.20.

4. The polymer casting solution according to any one of the preceding claims, **characterized in that** the solution does not comprise a further solvent selected from dimethyl acetamide or N-methylpyrrolidone, preferably does not comprise dimethyl acetamide, N-methylpyrrolidone, dimethyl formamide or dimethyl sulfoxide, more preferably does not comprise any further solvent.

5. A process for obtaining the polymer casting solution according to any of the preceding claims, **characterized in that** the process comprises the following steps:
a. providing γ-butyrolactone as a solvent,
b. adding a polysulfone to the γ-butyrolactone, and
c. dissolving the polysulfone in the γ-butyrolactone by mixing.

6. The process according to claim 5, **characterized in that** mixing in step c is carried out at a temperature in the range of 0 °C and 200 °C, preferably in the range of 20 °C and 100 °C, more preferably in the range of 50 °C and 80 °C and /or that mixing in step c is carried out for a period of time in the range of 1 h to 200 h, preferably in the range of 12 h to 168 h, more preferably in the range of 16 h and 36 h.

7. The process according to claims 5 or 6, **characterized in that** the process comprises an additional step a1 before step b, **characterized in that** an additive is added to the γ-butyrolactone in step a1 and/or that the solution obtained in step c is filtered

8. A process for obtaining a membrane, **characterized in that** the process comprises the following steps
I. providing a polymer casting solution according to any one of claims 1 to 4,
II. applying the polymer casting solution on a smooth surface,
III. processing the polymer casting solution into a wet film,
IV. exposing the wet film obtained in step III to a non-solvent in a coagulation bath, and
V. drying the membrane obtained in step IV.

9. The process according to claim 8, **characterized in that** the film obtained in step III is produced by the doctor blade technique utilizing a doctor blade,
wherein the gap height of the doctor blade is in the range of 100 µm and 400 µm, preferably of 125 µm and 300 µm and/or the belt speed is in the range of 0.5 m·min⁻¹ to 5 m·min⁻¹, preferably of 0.8 m·min⁻¹ to 2 m·min⁻¹.

10. The process according to any one of claims 8 or 9, **characterized in that** the non-solvent used in step IV is selected from the list consisting of water, methanol, and combinations thereof, preferably water and/or that step IV is carried out for at least 6 min, preferably in the range of 6 min to 30 min, more preferably of 8 min to 25 min and/or that step IV is carried out at a temperature in the range of 5 °C to 90 °C, preferably 15 °C to 40 °C.

11. The process according to any one of claims 8 to 10, **characterized in that** step V is carried out for at least 12 h, preferably in the range of 12 h to 50 h, even more preferably in the range of 14 h to 30 h and/or that the membrane in step V is air-dried, preferably air-dried at a temperature in the range of 20 °C to 30 °C.

12. A polysulfone membrane, **characterized in that** the membrane is a symmetric membrane with a sponge-like, porous structure.

13. The membrane according to claim 12, **characterized in that** the surface of the membrane is uniformly covered in pores and/or that the surface pores have a pore size in the range of 1 nm and 100 nm, preferably 5 nm and 50 nm determined by SEM imaging.

14. The membrane according to any of claims 12 or 13, **characterized in that** the pore size distribution determined by examination of the membrane with a porometer is in the range of 0.1 nm and 20 nm, preferably in the range of 0.1 nm and 15 nm, more preferably in the range of 0.1 nm and 10 nm and/or that the mean flow pore size determined by examination of the membrane with a porometer is in the range of 25 nm to 36 nm, preferably 27 nm to 33 nm, more preferably 29 nm to 31 nm.

15. A use of the membrane according to any one of claims 12 to 14 as an ultrafiltration membrane.
